# EUROPEAN PATENT SPECIFICATION

(11) **EP 1 901 445 B1**
(45) Date of publication and mention of the grant of the patent: **25.12.2013**
(21) Application number: 07018059.1
(22) Date of filing: 13.09.2007
(51) Int. Cl.: H04B 7/06, H04L 5/00

(54) **Frequency diversity**
Frequenzdiversität
Diversité de fréquence

(30) Priority: 15.09.2006 CN 200610154164
(43) Date of publication of application: 19.03.2008
(73) Proprietor: Huawei Technologies Co., Ltd., Longgang District, Shenzhen Guangdong 518129 (CN)
(72) Inventor: Yang, Changdong, Longgang District Shenzhen Guangdong Province 518129 (CN); Xu, Liang, Longgang District Shenzhen Guangdong Province 518129 (CN); Chen, Wei, Longgang District Shenzhen Guangdong Province 518129 (CN); Tang, Xiaotian, Longgang District Shenzhen Guangdong Province 518129 (CN); Peng, Xiang, Longgang District Shenzhen Guangdong Province 518129 (CN)
(74) Representative: Epping - Hermann - Fischer

(56) References cited:
- EP-A- 1 355 434
- WO-A-2004/073275
- US-A1- 2006 013 335

## Description

This application claims a priority of Chinese Patent Application No. 200610154164.5, filed with the Chinese Patent Office on September 15, 2006, titled "method and system for transmitting or receiving radio signal".

The present invention relates to the field of communication technologies, and in particular to a method and system for transmitting a radio signal, and a method and system for receiving a radio signal.

### Background of the Invention

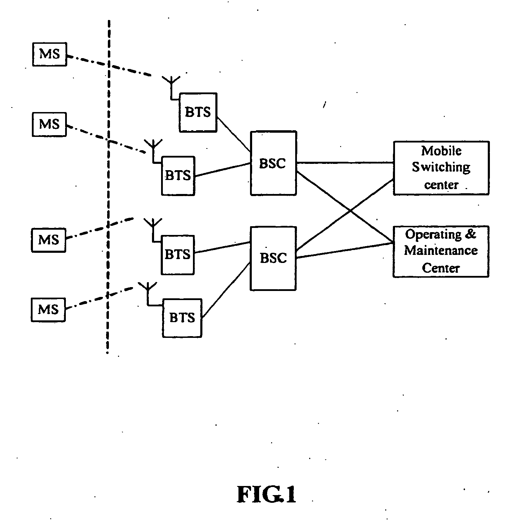

Global System of Mobile Communication (GSM) is one of mobile communication systems applied most widely all over the world. As illustrated in figure 1, a networking architecture of GSM includes a Mobile Switching Center (MSC), an Operating & Maintenance Center (OMC), Base Station Controllers (BSCs), Base Transceiver Stations (BTSs). Particularly, the MSC accomplishes information exchange, the OMC acts as a human-machine interface with the BSCs, the BSCs accomplish a control of the BTSs, and the BTSs accomplish a radio coverage, transmission and reception of a signal, etc. The BTSs and Mobile Stations (MSs) enable an information interaction through a radio signal via a radio interface. Issues such as multi-path and fading exist in radio signal transmission. In a mobile radio environment, signal fading may affect normal reception of the signal seriously. As a mobile station is moving, fast fading makes an instant value of signal strength change rapidly, so that the signal may be unstable at a receiving end. Furthermore, the received signal may become deteriorated greatly at some moments, thereby affecting normal communication.

For the purpose of suppressing signal fading and improving signal strength, diversity technology is typically utilized. Principle of the diversity technology lies in that signals carrying the same information and having a very low correlation between each other are received over several signal branches, and then these branch signals are combined with a combination technology into a signal which is in turn outputted. Because respective branch signals pass independent fading paths, and geographical shading effects vary, multiple slow faded signals which propagate through the independent fading paths are not correlated with each other. With diversity reception and combination, an influence of the fast fading can be reduced greatly so as to obtain a diversity gain. Generally, diversity-reception of 2-branch uncorrelated signals is of a gain 3dB more than reception of only 1-branch signal, and reception of 4-branch signals is of a gain 3dB more than reception of 2-branch signals.

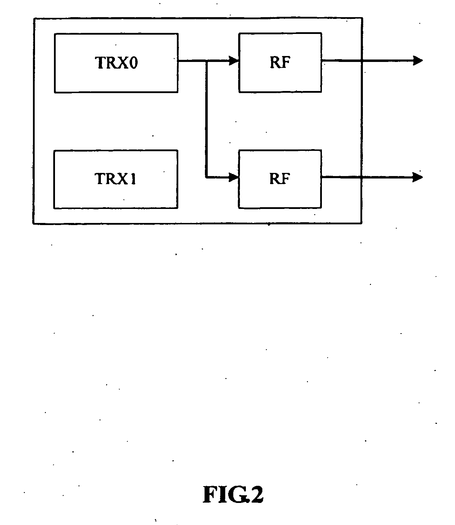

An implementing principle of transmission diversity in the prior art is illustrated in figure 2.

In the technology of transmission diversity, the same signal with a delay is transmitted repeatedly to reduce the probability that the fast fading occurs concurrently for signals received at the receiving end. As illustrated in figure 2, a baseband processing element TRX0 is used to send signals onto 2-branch radio frequency channels for transmission.

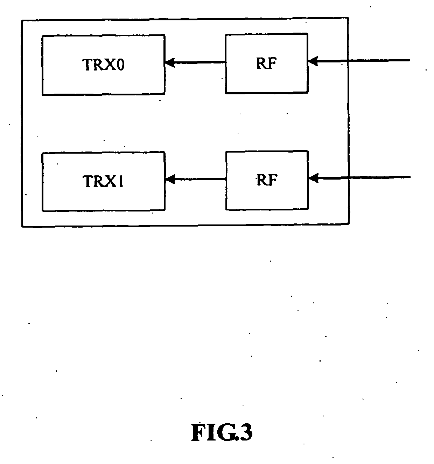

In correspondence with such transmission diversity, a principle of implementing reception diversity is illustrated in figure 3.

A receiver receives signals from 2-branch independent propagation paths, and a baseband processing element TRX1 utilizes the entire carrier for diversity reception from the baseband processing element TRX0. A diversity combining algorithm is used to perform a combination operation on user signals received by the baseband processing element TRX0 and the baseband processing element TRX 1 so as to obtain a diversity gain.

As can be seen from figure 2 and figure 3, the existing diversity technology occupies the entire carrier resource for diversity transmission and reception, which results in a waste of carrier resource, and hence affects the system capacity.

For example, US Patent Application Publication No. US2006/013335A1 discloses a radio communication system, which includes a remote device radio and a base station radio operable to communicate with the remote device radio at a first channel and at a second channel using non-simultaneous frequency diversity. The base station is operable to communicate with a device other than the remote device at the second channel while the remote device radio and the base station radio are communicating at the first channel. A radio using non-simultaneous frequency diversity includes an antenna, a radio frequency module coupled to the antenna such that the radio frequency module is operable to transmit or receive radio frequency signals at a first channel and at a second channel using the antenna, and a baseband module coupled to the radio frequency module. The baseband module is operable to transmit or receive signals through the radio frequency module, such that signals transmitted or received by the radio employ non-simultaneous frequency diversity using the first channel and the second channel. Additional devices are operable to use the second channel while the radio is transmitting or receiving radio frequency signals at the first channel.

Furthermore, European Patent Application Publication No. EP1355434A1 discloses a method for transmitting a signal between a terminal and a network component. The method comprises the steps of: determining a quality measure of a communication link between the terminal and the network component; comparing the quality measure with a threshold quality level; selecting transmit diversity off if the quality measure is above the threshold quality level, and selecting transmit diversity on if the quality measure is below the threshold quality level.

### Summary of the Invention

An embodiment of an embodiment of the invention provides a method for transmitting a radio signal and a method for receiving a radio signal, to reduce a waste of carrier resource in the prior art.

Another embodiment of an embodiment of the invention provides a system for transmitting a radio signal and a system for receiving a radio signal, to save carrier resource. Embodiments of the invention provide the following technical solutions.

A method for transmitting a radio signal, including:
performing diversity transmission of a user signal by using at least one extended time slot of at least one carrier other than a primary carrier, of which a primary time slot is occupied initially by the user, within a first cell, if a downlink quality of the user is below a preset lower threshold; and
releasing the at least one extended time slot of which is occupied by the user, if the downlink quality of the user is above a preset upper threshold; wherein the at least one extended time slot has the same time slot number as that of the primary time slot.

A method for receiving a radio signal, including:
performing diversity reception of a user signal by using at least one extended time slot of at least one carrier other than a carrier, of which a primary time slot is occupied initially by the user, within a first cell, if an uplink quality of the user is below a preset lower threshold; and
releasing the at least one extended time slot which is occupied by the user, if the uplink quality of the user is above a preset upper threshold; wherein the at least one extended time slot has the same time slot number as that of the primary time slot.

A system for transmitting a radio signal, including:
a data sharing bus, adapted to share a user signal;
a primary carrier baseband processing element, adapted to transmit the user signal, transmitted upon a time slot of a carrier occupied initially by a user, to a radio frequency element, and transmit the user signal onto the data sharing bus;
a secondary carrier baseband processing element, adapted to transmit the user signal of a time slot on a secondary carrier to the radio frequency element;
the radio frequency element, adapted to modulate and transmit concurrently the user signal, transmitted from the primary carrier baseband processing element and the secondary carrier baseband processing element, via an air interface;
a link quality detection element, adapted to detect a link quality of the user;
a data distribution element, adapted to, in accordance with a detection result of the link quality detection element, transmit the user signal on the data sharing bus to an extended time slot of the secondary carrier baseband processing element if a downlink quality of the user is below a preset lower threshold, and cease the transmission of the user signal to the extended time slot of the secondary carrier baseband processing element if the downlink quality of the user is above a preset upper threshold, wherein the extended time slot of the secondary carrier baseband processing element has the same time slot number as that of the time slot occupied initially by a user.

A system for receiving a radio signal, including:
a radio frequency element, adapted to receive a user signal and transmit the user signal concurrently to a primary carrier baseband processing element and a secondary carrier baseband processing element;
a primary carrier baseband processing element, adapted to perform AD sampling and equalization demodulation on the user signal on a primary carrier received by the radio frequency element;
a secondary carrier baseband processing element, adapted to perform AD sampling and equalization demodulation on the user signal on a secondary carrier received by the radio frequency element;
an uplink demodulated data sharing bus, adapted to share and transmit the user signal from the primary carrier baseband processing element and the secondary carrier baseband processing element;
a channel decoding element, adapted to perform channel decoding on the user signal on the uplink demodulated data sharing bus;
a link quality detection element, adapted to detect a link quality of the user;
a data distribution element, adapted to transmit the user signal on the primary carrier received by the radio frequency element to an extended time slot on the secondary carrier baseband processing element if the link quality detection element detects that an uplink quality of the user is below a preset lower threshold, and cease the transmission of the user signal on the primary carrier received by the radio frequency element to the extended time slot of the secondary carrier baseband processing element if the link quality detection element detects that the uplink quality of the user is above a preset upper threshold; wherein the extended time slot of the secondary carrier baseband processing element has the same time slot number as that of a time slot of the primary carrier occupied initially by a user.

Dependent upon network applications, the embodiments of the invention make a sufficient use of idle time slots in a network, instead of use of an entire carrier, for diversity transmission and reception, thus improving utilization rate of system resource.

### Brief Description of the Drawings

Figure 1 is a diagram illustrating an architecture of an existing GSM network;
Figure 2 is a schematic diagram of transmission diversity in the prior art;
Figure 3 is a schematic diagram of reception diversity in the prior art;
Figure 4 is a schematic diagram of a radio frame in a GSM system;
Figure 5 is a statistic diagram of an occupancy of channels within a cell for one day of an operator;
Figure 6 is a flow chart of dynamic multi-diversity transmission in an embodiment of the invention;
Figure 7 is a principle diagram of a dynamic multi-diversity transmission system in an embodiment of the invention;
Figure 8 is a flow chart of dynamic multi-diversity reception in an embodiment of the invention;
Figure 9 is a principle diagram of dynamic multi-diversity reception system in an embodiment of the invention;
Figure 10 is another principle diagram of dynamic multi-diversity reception system in an embodiment of the invention; and
Figure 11 is a diagram comparing the network link quality before using the present invention and after using the present invention according to an embodiment of the invention.

### Detailed Description of the Invention

According to embodiments of the invention, idle time slots of multiple carriers within a cell are used to transmit or receive multiple duplicates of the same signal, and a receiving end receives and combines the multiple duplicates of the same signal, so as to obtain a combination gain. In specific implementation, uplink and downlink quality thresholds may be preset respectively. In transmission of a signal, if a downlink quality of a user is below a lower threshold, an idle time slot of another carrier within the current cell is used for diversity transmission of the signal of the user. If the downlink quality of the user is above an upper threshold, the time slot of another carrier occupied by the user is released. Similarly, in reception of a signal, if an uplink quality of the user is below a lower threshold, the idle time slot of the another carrier within the current cell is used for diversity transmission of the signal of the user, and if the uplink quality of the user is above an upper threshold, the time slot of another carrier occupied by the user is released. In other words, the idle time slots within the current cell are used for diversity transmission and reception, so that the link quality of the user can be ensured and a network resource can be saved.

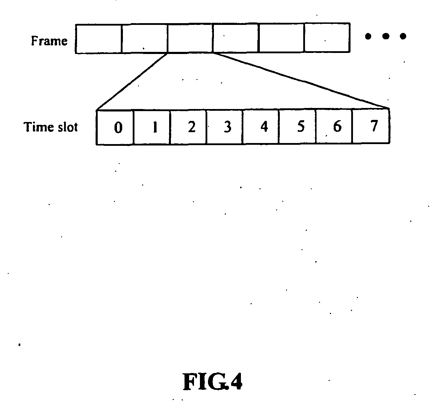

A brief description is given first on a frame structure of a GSM system to make solutions of the embodiments of the invention better understood by those skilled in the art. As known to those skilled in the art, in the GSM system, each radio frame includes 8 time slots and, as illustrated in Figure 4, each user occupies one time slot. If a time slot is not occupied by any user, this time slot is idle.

Typically, for a normal operation of the network, the number of carriers within a serving cell is set in accordance with the number of carriers required for a busiest case with a reservation of a redundant number of carriers so as to satisfy the service requirements as much as possible. However, the network in an idle state may involve many idle carriers and time slots.

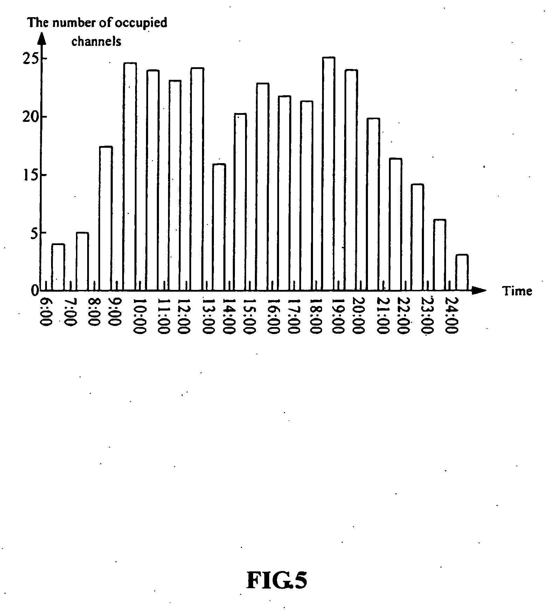

For instance, the occupancy of channels within a cell at respective time instants for one day is illustrated in figure 5. In this figure, the number of available traffic channels within the cell is 25. It can be seen that, at those times in the morning, afternoon and evening, the number of users in a call is large, and the utilization rate of channels is high, while at those times at dawn, noon and in the midnight, the number of users in a call is small, and the utilization rate of channels is low. At the time instants with a low utilization rate of channels, numerous channels are not occupied by any user, and thus are in an idle state. Idle time slots are not utilized, and there are more idle time slots particularly when the network is idle, which results in a great waste of system resource.

In view of the above situations, embodiments of the invention enable dynamic transmission and reception diversities with the use of idle time slots within a cell in accordance with a network link quality.

The invention is further detailed with reference to the drawings and the embodiments of the invention.

Typically, there are multiple carriers within a GSM cell. For a convenient description of the embodiments, a time slot occupied initially by a user is called a primary time slot in the following, and a time slot of another carrier within the same cell, which has the same time slot number as the primary time slot does, is called an extended time slot.

In normal operation of a service, the user gives a real-time service quality report to a Base Station Controller (BSC) through a measurement report. The BSC determines whether a link quality of the user satisfies a service requirement in accordance with a measurement report from a base station and the measurement report from the user. In this regard, a lower threshold is preset according to an embodiment of the invention. If the link quality is below the lower threshold, the system initiates a command for multi-diversity transmission or reception. Correspondingly, an upper threshold is preset. If the link quality is above the upper threshold, the multi-diversity transmission or reception is not needed, and an extended time slot as occupied is released to save radio resource.

In the use of an extended time slot for diversity transmission of a user signal, a frequency point of the extended time slot shall be set as being identical to that of a primary time slot. Because a time slot number of the primary time slot is the same as that of the extended time slot, concurrent transmission at the same time window can be ensured.

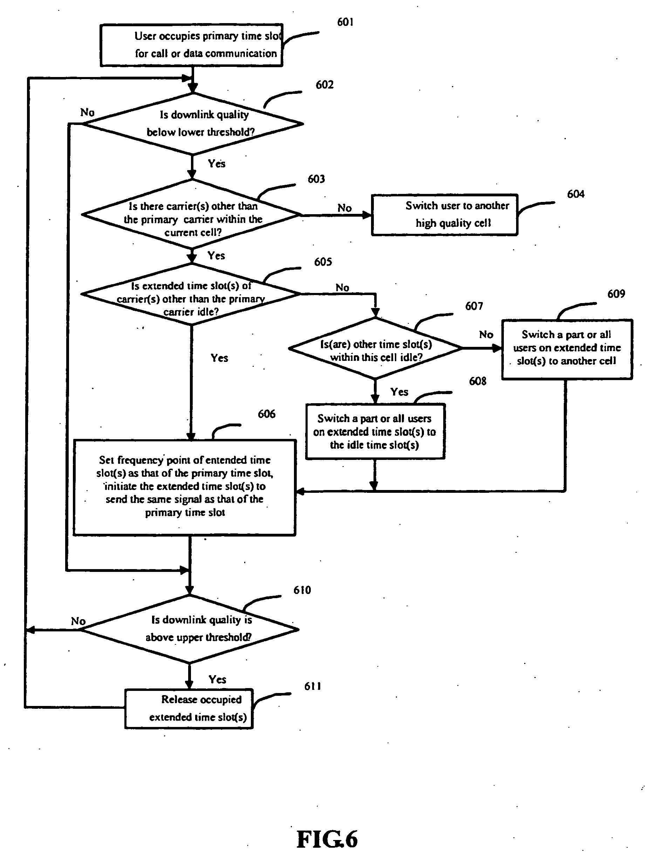

Figure 6 illustrates a flow chart of dynamic diversity transmission according to an embodiment of the invention, including the steps as follows.

Step 601: A user occupies a primary time slot of a primary carrier for a call or data communication.

Step 602: It is determined whether a downlink quality is below a lower threshold. If yes, the procedure proceeds with step 603, otherwise the procedure proceeds with step 610. Step 603: It is determined whether a current cell has a carrier(s) other than the first carrier. If yes, the procedure proceeds with step 605, otherwise the procedure proceeds with step 604.

Step 604: The user is handed over to another high quality cell.

Step 605: It is determined whether an extended time slot(s) of carrier(s) other than the primary carrier is(are) idle. If idle, the procedure proceeds with step 606; if no extended time slot is idle, i.e., the extended time slots are all occupied by other users, the procedure proceeds with step 607.

Step 606: A frequency point(s) of the extended time slot(s) is(are) set as a frequency point where the primary time slot is located, and the extended time slot(s) is initiated to transmit the same signal as that of the primary time slot. In other words, the extended time slot(s) is used for diversity transmission of the user signal. Then, the procedure proceeds with step 610.

Step 607: It is determined whether other time slot(s) within the cell is(are) idle. If idle, the procedure proceeds with step 608. If not idle, the procedure proceeds with step 609. Step 608: The BSC issues a handover command to hand over a part or all of users on the extended time slot(s) to the other idle time slot(s). Then, the procedure proceeds with step 606.

Step 609: The BSC issues a handover command to hand over a part or all of users on the extended time slot(s) to another cell. Then, the flow proceeds with step 606.

Step 610: It is determined whether the link quality at this time is above the upper threshold. If yes, the procedure proceeds with step 611; otherwise, the procedure proceeds with step 602.

Step 611: The BSC issues a command for releasing an occupied extended time slot. Then, the procedure proceeds with step 602.

In the above procedure, periodical detection and determination is required for the link quality. After a cycle of determination is finished, a next cycle of detection and determination can be made after a delay. Only a procedure of continuous detections and determinations is shown in figure 6.

During the service for the user, the link quality is constantly detected and compared with the upper and lower thresholds, and the number of extended time slots of other carriers for diversity transmission of the user signals are increased or decreased in a timely manner, hence the link quality is improved and the link quality of the user is controlled in a relatively good range. Therefore, the utilization rate of the system resource is improved, and a dynamic multi-diversity transmission is realized.

A specific example is given for a procedure of implementing the method as follows.

For instance, channel structures and uses of respective carriers within a cell in a normal case at a certain time instant are illustrated in the following table.

### Carrier 0:

| Time slot Number | Traffic Channel Number |
|---|---|
| 0 | Broadcast channel |
| 1 | Signaling channel |
| 2 | Traffic channel 0 (occupied) |
| 3 | Traffic channel 1 (occupied) |
| 4 | Traffic channel 2 |
| | (occupied) |
| 5 | Traffic channel 3 (occupied) |
| 6 | Traffic channel 4 (occupied) |
| 7 | Traffic channel 5 (idle) |

### Carrier 1:

| Time slot Number | Traffic Channel Number |
|---|---|
| 0 | Signaling channel |
| 1 | Traffic channel 0 (occupied) |
| 2 | Traffic channel 1 (occupied) |
| 3 | Traffic channel 2 (occupied) |
| 4 | Traffic channel 3 (idle) |
| 5 | Traffic channel 4 (occupied) |
| 6 | Traffic channel 5 (occupied) |
| 7 | Traffic channel 6 (idle) |

...

### Carrier n:

| Time slot Number | Traffic Channel Number |
|---|---|
| 0 | Signaling channel |
| 1 | Traffic channel 0 (occupied) |
| 2 | Traffic channel 1 (occupied) |
| 3 | Traffic channel 2 (occupied) |
| 4 | Traffic channel 3 (idle) |
| 5 | Traffic channel 4 (occupied) |
| 6 | Traffic channel 5 (occupied) |
| 7 | Traffic channel 6 (occupied) |

Time slot 0 of carrier 0 is configured as a broadcast channel, and each carrier is configured with a signaling channel.

At this time, a user occupies time slot 4 of carrier 0 for a call or data communication. A user terminal and a BTS report a link quality report to the BSC at a time interval.

At a time instant, if the link quality deteriorated to be below the lower threshold, the system is triggered to start execution of a command for multi-diversity transmission. There are other carriers in the cell where the user is located.

At this time instant, if time slot 4 of carrier 1 is not occupied by any user, i.e. in an idle state, the BSC instructs the BTS to initiate carrier 1, where time slot 4 of the carrier 1 is set as being with the same frequency point as time slot 4 of carrier 0, and time slot 4 of carrier 1 is used for transmission of a signal of time slot 4 of carrier 0.

If time slot 4 of carrier 1 is occupied by a user, and there are other time slots which are idle in the cell, the BSC issues a handover command to hand over user of time slot 4 of the carrier 1 to any of the other time slots, and issues another command instructing to set time slot 4 of carrier 1 as being with the same frequency point as time slot 4 of carrier 0, and time slot 4 of carrier 1 is used for transmission of a signal of time slot 4 of carrier 0.

If time slot 4 of carrier 1 is occupied by a user, and all other time slots of the carrier have been occupied, the BSC issues a handover command to hand over a user of time slot 4 of carrier 1 to another cell, and issues another command instructing the BSC to use time slot 4 of carrier 1 for transmission of a signal of time slot 4 of carrier 0.

Upon reception of the command, the BTS instructs a baseband processing element of carrier 1 to obtain the signal of time slot 4 of carrier 0, which is delayed by a relative short time with a delay diversity technology and transmitted via an air interface. Because both the carriers are within the same cell, a receiving end determines that the two-branch signals are synchronous, and because transmission of the two-branch signals is accomplished in the same time slot, the terminal can receive the two-branch signals at the same time.

If the link quality still fails to satisfy a requirement, the system may further initiate time slot 4 of carrier 2, and therefore add a transmission diversity channel to further improve the link quality, and so on.

If the link quality is improved subsequently to be above the upper threshold, the multi-diversity transmission will be not needed, and the BSC issues a command for releasing an extended time slot.

In this manner, the dynamic multi-diversity transmission is accomplished.

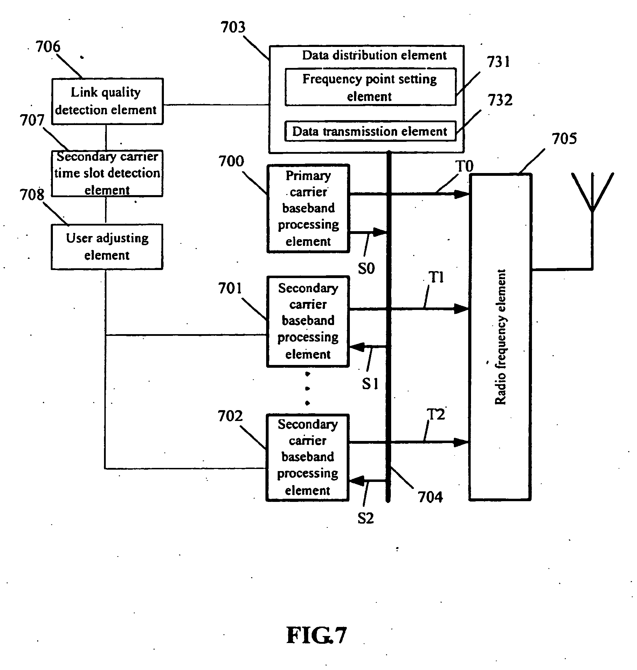

Figure 7 illustrates a principle block diagram of a dynamic multi-diversity transmission system according to an embodiment of the invention.

The system includes a primary carrier baseband processing element 700, a secondary carrier baseband processing element 701, a secondary carrier baseband processing element 702, a data distribution element 703, a data sharing bus 704, a radio frequency element 705, and a link quality detection element 706.

Particularly, the primary carrier baseband processing element 700 is adapted to transmit through channel T0 a user signal of a user, which initially occupies a time slot of the carrier, to the radio frequency element 705, and also transmits a duplicate of the user signal through channel S0 to the data sharing bus 704.

The data sharing bus 704 is adapted to share signals transmitted from the primary carrier baseband processing element 700.

The link quality detection element 706 is adapted to detect a link quality of the user.

The data distribution element 703 is adapted to, in accordance with a detection result of the link quality detection element 706, transmit the user signal on the data sharing bus 704 to extended time slot(s) of the secondary carrier baseband processing element(s) if the link quality of the user is below a preset lower threshold, and cease the transmission of the user signal to extended time slot(s) of the secondary carrier baseband processing element(s) if the link quality of the user is above a preset upper threshold. The data distribution element 703 includes a frequency point setting element 731 and a data transmission element 732. The frequency point setting element 731 is adapted to set frequency point(s) of extended time slot(s) of the secondary carrier baseband processing element(s) as the frequency point of the primary carrier baseband processing element. The data transmission element 732 is adapted to transmit the user signal on the data sharing bus 704 respectively through channels S1 and S2 to the secondary carrier baseband processing element 701 and the secondary carrier baseband processing element 702.

The secondary carrier baseband processing element 701 and the secondary carrier baseband processing element 702 each receives a duplicate of the user signal respectively through channels S1 and S2, then uses a time slot of the current baseband processing element, which has the same time slot number as the time slot occupied initially by the user signal on the primary carrier baseband processing element 700 does, to process and transmit the duplicate of the user signal, and transmits the duplicate of the user signal to the radio frequency element 705 respectively through channels T1 and T2.

The radio frequency element 705 is adapted to modulate and then transmit via an air interface the several duplicates of the same user signal transmitted from the baseband processing elements.

For transmission of the user signal in a valid idle time slot of the cell where the user is located, the system according to an embodiment of the invention further includes: a secondary carrier time slot detection element 707 and a user adjusting element 708. Particularly, the secondary carrier time slot detection element 707, coupled with the link quality detection element 706, is adapted to detect whether extended time slot(s) of the secondary carrier baseband processing element(s) is(are) idle when the link quality of the user is below the preset lower threshold. The user adjusting element 708 is adapted to, in accordance with a detection result of the secondary carrier time slot detection element, e.g., when no extended time slot of the secondary carrier baseband processing elements is idle, hand over users, who occupy the extended time slots of the secondary carrier baseband processing elements, to other idle time slots of the current cell or to another cell.

The procedure of processing a user signal in the dynamic multi-diversity transmission system is similar to that in the dynamic multi-diversity transmission method according to a previous embodiment of the invention. The user signal initially occupies a time slot of the primary carrier baseband processing element 700, and is transmitted to the radio frequency element 705 through channel T0, and also is transmitted to the data sharing bus 704 through channel S0. If the link detection element 706 detects that the link quality is below the lower threshold, the secondary carrier detection element 707 detects whether an extended time slot(s) of a carrier other than the first carrier is(are) idle. If no extended time slot is idle, the secondary carrier detection element 707 instructs the user adjusting element 708 to hand over the user(s) in the extended time slot(s) of the carrier other than the first carrier to other idle time slot(s) of the current cell or to another cell. Then, the frequency point setting element 721 sets frequency point(s) of time slot(s) of the secondary carrier baseband processing element(s), which has the same time slot number as the time slot of the primary carrier occupied by the user does, as a frequency point of the time slot of the primary carrier occupied initially by the user. The data transmission element 722 transmits a duplicate of the user signal on the data sharing bus 704 through channel S1 to an idle extended time slot of the secondary carrier baseband processing element 701, which has the same time slot number as the time slot of the primary carrier baseband processing element 700 occupied initially by the user signal does. The duplicate of the user signal on the primary carrier is processed by the secondary carrier baseband processing element 701, and is transmitted to the radio frequency element 705 through channel T1. The radio frequency element 705 modulates and transmits concurrently via an air interface the duplicates of the same user signal received from the primary and secondary carrier baseband processing elements. If the link quality still fails to satisfy the requirements, a way similar to that described above may be used to transmit the duplicates of the user signal onto an extended time slot of another carrier within the current cell for transmission. For instance, in figure 7, the data distribution element also transmits the duplicate of the user signal into the extended time slot of the secondary carrier baseband processing element 702. The duplicate is processed by the secondary carrier baseband processing element 702, and are transmitted to the radio frequency element 705, thus enabling the multi-diversity transmission. Upon detection of that the link quality is above the upper threshold, the link quality detection element 706 instructs the data distribution element 703 to cease the transmission of information of the user to the secondary carrier baseband processing element 701. In other words, the extended time slot of the carrier is released, and only the time slot of the primary carrier baseband processing element 700 occupied initially by the user signal is used.

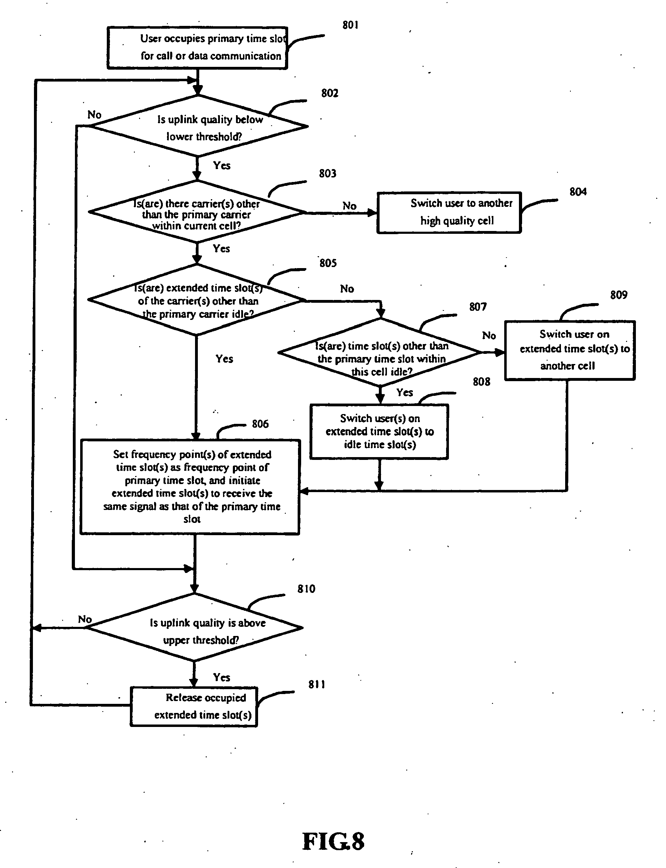

Figure 8 illustrates a flow chart of dynamic multi-diversity reception according to an embodiment of the invention, including the steps as follows.

Step 801: A user occupies a primary time slot of a primary carrier for a call or data communication.

Step 802: It is determined whether an uplink quality is below a lower threshold. If yes, the procedure proceeds with step 803, otherwise the procedure proceeds with step 810.

Step 803: It is determined whether a current cell has a carrier(s) other than the primary carrier. If yes, the procedure proceeds with step 805, otherwise the procedure proceeds with step 804.

Step 804: The user is handed over to another high-quality cell.

Step 805: It is determined whether an extended time slot(s) of carrier(s) other than the primary carrier is(are) idle. If idle, the procedure proceeds with step 806. If not idle, i.e. the extended time slot(s) is(are) occupied by another user, the procedure proceeds with step 807.

Step 806: A frequency point(s) of the extended time slot(s) of the carrier(s) other than the first carrier is(are) set as a frequency point where the primary time slot is located, and the extended time slot(s) is(are) initiated for receiving the same signal as the primary time slot. Then, the procedure proceeds with step 810.

Step 807: It is determined whether a time slot(s) other than the primary time slot within the cell is(are) idle. If idle, the procedure proceeds with step 808, otherwise the procedure proceeds with step 809.

Step 808: A BSC issues a handover command to hand over the user(s) on the extended time slot(s) to the idle time slot(s) other than the primary time slot. Then, the procedure proceeds with step 806.

Step 809: A BSC issues a handover command to hand over the user(s) on the extended time slot(s) to another cell. Then, the procedure proceeds with step 806.

Step 810: It is determined whether the link quality at this time is above an upper threshold. If yes, the procedure proceeds with step 811; otherwise, the procedure proceeds with step 802.

Step 811: The BSC issues a command for releasing an occupied extended time slot. Then, the procedure proceeds with step 802.

Particularly, the primary time slot and the extended time slot(s) shall have the same time slot number in order to ensure concurrent reception at the same time window.

In the above procedure, the link quality should be periodically detected and determined. After a cycle of detection and determination is accomplished, a next cycle of detection and determination may be performed after a certain delay. Figure 8 illustrates only a flow of continuous detections and determinations.

Because during the service for the user, the link quality is constantly detected and compared with the upper and lower thresholds, and the number of extended time slots of the carrier(s) other than the first carrier for diversity reception of the user signal is increased or decreased in a timely manner, the link quality can be thus improved and also be controlled in a relatively better range for the user.

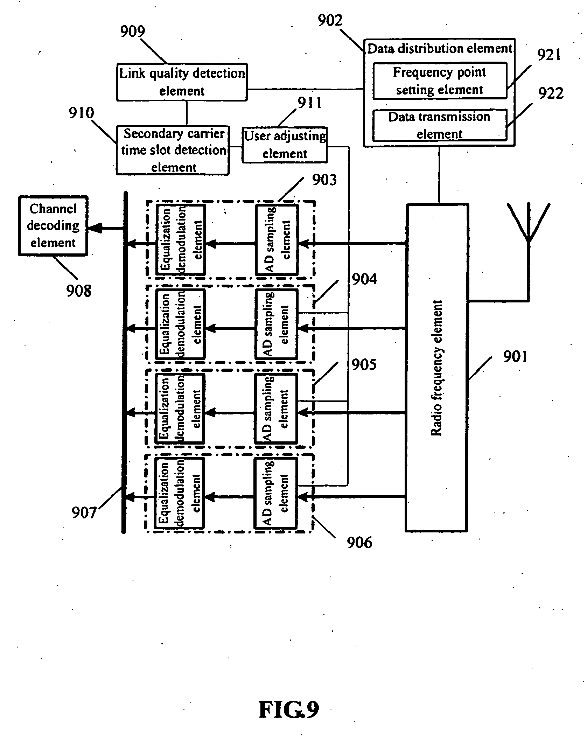

Figure 9 illustrates a principle block diagram of a first embodiment of a dynamic multi-diversity reception system in the invention.

The system includes a radio frequency element 901, a data distribution element 902, a primary carrier baseband processing element 903, secondary carrier baseband processing elements 904, 905 and 906, a link quality detection element 909, and an uplink demodulated data sharing bus 907, and a channel decoding element 908.

The primary and secondary carrier baseband processing elements each includes an AD sampling element and an equalization demodulation element as illustrated for performing AD sampling and equalization demodulation on a user signal, respectively.

The radio frequency element 901 is adapted to receive a signal transmitted from a user. The primary carrier baseband processing element 903 is adapted to perform AD sampling and equalization demodulation on a user signal over a primary carrier received by the radio frequency element 901. Each of the secondary carrier baseband processing elements is adapted to perform AD sampling and equalization demodulation on a user signal over a secondary carrier, which has a frequency different from that of the primary carrier, received by the radio frequency element 901. The uplink demodulated data sharing bus 907 is adapted to share and transmit user signals transmitted from the respective AD sampling and equalization demodulation processing elements. The channel decoding element 908 is adapted to perform channel decoding on user signals on the uplink demodulated data sharing bus 907. The link quality detection element 909 is adapted to detect a link quality of the user.

The data distribution element 902 is adapted to, in accordance with a detection result of the link quality detection element 906, e.g. when the uplink quality of the user is below a preset lower threshold, transmit the user signal on the primary carrier received by the radio frequency element 901 to an extended time slot(s) of the secondary carrier baseband processing element(s), and cease the transmission of the user signal on the primary carrier received by the radio frequency element 901 to the extended time slot(s) of the secondary carrier baseband processing element(s) if the uplink quality of the user is above a preset upper threshold. The data distribution element 902 includes a frequency point setting element 921 and a data transmission element 922. The frequency point setting element 921 is adapted to set the frequency point(s) of an idle extended time slot(s) of the secondary carrier baseband processing element(s) as that of the primary carrier baseband processing element if the link quality of the user is below the preset lower threshold. The data transmission element 922 is adapted to transmit a duplicate of the user signal to a secondary carrier baseband processing element.

For reception of the user signal in a valid idle time slot of the cell serving the user, the system according to an embodiment of the invention further includes a secondary carrier time slot detection element 910 and a user adjusting element 911. Particularly, the secondary carrier time slot detection element 910, coupled with the link quality detection element 909, is adapted to detect whether the extended time slot(s) of the secondary carrier baseband processing element(s) is(are) idle, if the link quality of the user is below the preset lower threshold. The user adjusting element 911 is adapted to hand over the user(s) who occupy(ies) the extended time slot(s) of the secondary carrier baseband processing element(s) to other idle time slot(s) of the current cell or to another cell in accordance with a detection result of the secondary carrier time slot detection element, e.g., if the extended time slot(s) of the secondary carrier baseband processing element(s) is(are) not idle.

The channel decoding element 908 is adapted to decode a user signal.

The procedure of processing a user signal in the dynamic multi-diversity reception system is similar to that in the dynamic multi-diversity reception method according to the previous embodiment of the invention. The radio frequency element 901 receives and initially transmits a user signal to a primary time slot of the primary carrier baseband processing element, and the AD sampling element and the equalization demodulation element in the primary carrier baseband processing element perform AD sampling and equalization demodulation on the user signal. If the link quality detection element 909 detects that the uplink quality of the user is below a lower threshold, the secondary carrier time slot detection element 910 detects whether an extended time slot(s) of the secondary carrier baseband processing element(s) is(are) idle, and if no extended time slot is idle, the user adjusting element 911 hands over the user(s) who occupy(ies) the extended time slot(s) of the secondary carrier baseband processing element(s) to other idle time slot(s) of the current cell or to another cell. After the adjusting is finished, the frequency point setting element 921 sets a frequency point of the extended time slot of the secondary carrier baseband processing element 904 as a frequency point of the time slot of the primary carrier baseband processing element occupied initially by the user. Then, the data transmission element 922 repeats transmission of the user signal to the idle time slot of the secondary carrier baseband processing element 904, in which the idle time slot has the same time slot number as the time slot of the primary carrier baseband processing element occupied initially by the user signal does. If the extended time slot of the secondary carrier baseband processing element 904 is not idle, it is detected whether an extended time slot of another secondary carrier baseband processing element is idle, and if idle, the user signal is transmitted repeatedly to the idle time slot of the secondary carrier baseband processing element in the way as described above. Indeed, such a condition shall still be satisfied that the time slot number of the idle time slot is the same as that of the time slot of the primary carrier baseband processing element occupied initially by the user signal.

Besides, the user who occupies the extended time slot of the secondary carrier baseband processing element 904 may also be handed over to another idle time slot of the current cell or to another cell, thus making the extended time slot idle. Then, the user signal is transmitted repeatedly to the idle time slot of the secondary carrier baseband processing element 904. If the link quality of the user still fails to satisfy the requirements, the user signal may be transmitted repeatedly to an idle extended time slot of another secondary carrier baseband processing element.

In the embodiment, after the primary and secondary carrier baseband processing elements perform AD sampling and equalization demodulation on the signal of the same user received by the radio frequency element, the signal is transmit to the channel decoding element 908 through the uplink demodulated data sharing bus 907. Thus, the same user signal is processed through multiple branches and transmitted to the channel decoding element, thus enabling the dynamic multi-diversity reception.

If the link quality detection element 909 detects that the link quality of the user is above the upper threshold, the data distribution element 902 releases the time slot of a secondary carrier baseband processing element occupied by the user signal. In other words, only the primary carrier baseband processing element is used to extract the user signal.

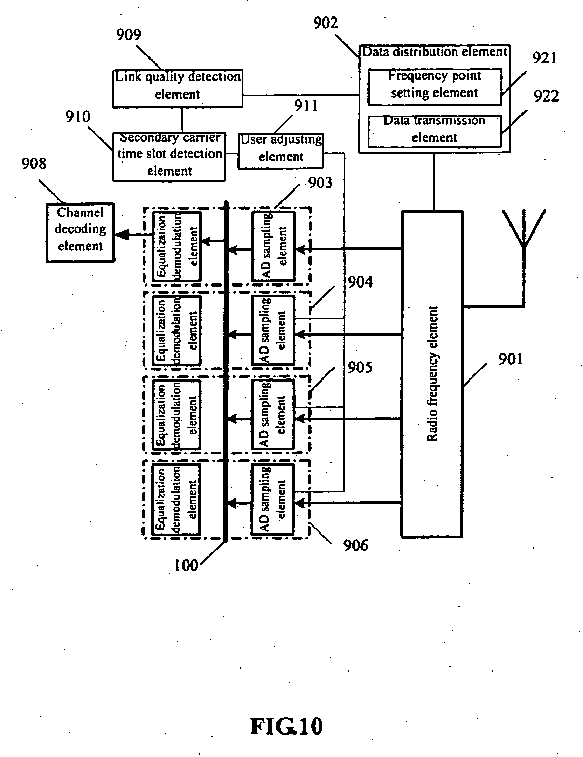

Figure 10 illustrates a principle diagram of a second embodiment of a dynamic multi-diversity reception system in the invention.

As being different from the first embodiment as illustrated in Figure 9, in the present embodiment, after the radio frequency element 901 concurrently transmits the same user signal as received to the primary and secondary carrier baseband processing elements, the AD sampling elements in the respective baseband processing elements perform AD sampling on the user signal, and then the sampled data is transmitted onto the uplink data sharing bus 100. Then, the equalization demodulation element in the primary carrier baseband processing element performs equalization demodulation on the data on the bus, and the processed signal is transmitted to the channel decoding element.

As can be seen from the above two embodiments, according to the embodiments of the invention, the idle time slots in the uplink channel are used to receive the duplicates of the signal transmitted by the same user respectively, and the duplicates are combined to obtain a combination gain, thus improving the uplink quality and effectively improving the utilization rate of the system resource.

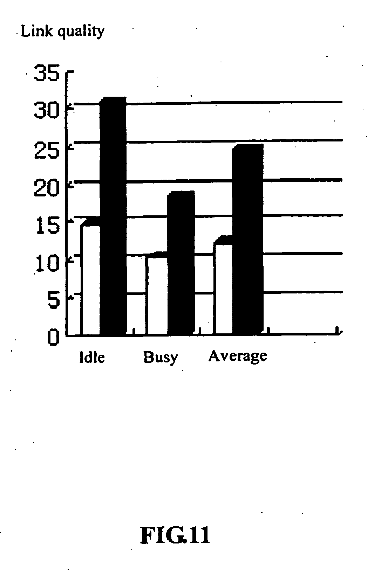

Figure 11 is a statistic comparison diagram before vs. after the implementation of the method and system according to the embodiments of the invention. Wherein, a white block represents the link quality when the dynamic transmission or reception diversity is absent, and a black block represents the link quality when the dynamic transmission or reception diversity is present. As can be seen, the link quality is improved greatly when the link is idle and also is improved when the link is busy, and thus averagely, the link quality has been improved considerably.

Obviously, according to the embodiments of the invention, the idle time slots in the network, instead of the entire carrier, are used sufficiently for diversity transmission and reception dependent upon network applications, thus improving the utilization rate of the system resource. According to the embodiments, when a terminal service is in a low quality due to a poor quality of the network, the idle time slots are used for providing a link gain, which will improve the link quality without reducing the existing network capacity. Moreover, after the terminal link quality is improved, an extended diversity processing time slot can be released to improve the network capacity. The method and system for transmitting and receiving a radio signal according to the embodiments of the invention can ensure a dynamic balance between the network capacity and the signal coverage. Although the invention has been described with reference to the embodiments of the present invention, it shall be acknowledged by those skilled in the art that various modifications and variations can be made to the present invention.

## Claims

1. A method for transmitting a radio signal, comprising:
performing diversity transmission of a user signal by using at least one extended time slot of at least one carrier other than a primary carrier, of which a primary time slot is occupied initially by the user, within a first cell, if a downlink quality of the user is below a preset lower threshold; and
releasing (611) the at least one extended time slot which is occupied by the user, if the downlink quality of the user is above a preset upper threshold;
wherein the at least one extended time slot has the same time slot number as the primary time slot does.

2. The method for transmitting a radio signal according to claim 1, wherein the step of performing diversity transmission of a user signal further comprises:
handing over (608) a part or all of users on the at least one extended time slot to an idle time slot within the first cell, if none of the at least one extended time slot is idle and the first cell has the idle time slot; or
handing over (609) a part or all of users on the at least one extended time slot to an idle time slot within a second cell, if none of the at least one extended time slot is idle, and the first cell has no idle time slot.

3. A method for receiving a radio signal, comprising:
performing diversity reception of a user signal by using at least one extended time slot of at least one carrier other than a primary carrier, of which a primary time slot is occupied initially by the user, within a first cell, if an uplink quality of the user is below a preset lower threshold; and
releasing (811) the at least one extended time slot which is occupied by the user, if the uplink quality of the user is above a preset upper threshold;
wherein the at least one extended time slot has the same time slot number as the primary time slot does.

4. The method for receiving a radio signal according to claim 3, wherein the step of performing diversity reception of a user signal further comprises:
handing over (808) a part or all of users on the at least one extended time slot to an idle time slot within the first cell, if none of the at least one extended time slot is idle and the first cell has the idle time slot; or
handing over (809) a part or all of users on the at least one extended time slot to an idle time slot within a second cell, if none of the at least one extended time slot is idle, and the first cell has no idle time slot.

5. A system for transmitting a radio signal, comprising:
a data sharing bus (704), adapted to share a user signal;
a primary carrier baseband processing element (700), adapted to transmit the user signal, transmitted upon a time slot of a carrier occupied initially by a user, to a radio frequency element (705), and transmit the user signal onto the data sharing bus (704);
a secondary carrier baseband processing element (701, 702), adapted to transmit the user signal on a time slot of a secondary carrier to the radio frequency element (705);
the radio frequency element (705), adapted to modulate the user signal, which is from the primary carrier baseband processing element (700) and the secondary carrier baseband processing element (701, 702), and transmit the user signal via an air interface;
a link quality detection element (706), adapted to detect a link quality of the user;
a data distribution element (703), adapted to, in accordance with a detection result of the link quality detection element (706), transmit the user signal on the data sharing bus (704) to an extended time slot of the secondary carrier baseband processing element (701, 702) if a downlink quality of the user is below a preset lower threshold, and cease the transmission of the user signal to the extended time slot of the secondary carrier baseband processing element (701, 702) if the downlink quality of the user is above a preset upper threshold, wherein the extended time slot of the secondary carrier baseband processing element (701, 702) has the same time slot number as the time slot occupied initially by a user.

6. The system for transmitting a radio signal according to claim 5, wherein the system further comprises:
a secondary carrier time slot detection element (707),
coupled with the link quality detection element (706) and adapted to detect whether the extended time slot of the secondary carrier baseband processing element (701, 702) is idle, if the link quality detection element (706) detects that the link quality of the user is below the preset lower threshold; and
a user adjusting element (708), adapted to, if the secondary carrier time slot detection element (707) detects that the extended time slot of the secondary carrier baseband processing element (701, 702) is not idle, hand over a user,
who occupies the extended time slot of the secondary carrier baseband processing element (701, 702), to a second idle time slot within the first cell or to a second cell.

7. A system for receiving a radio signal, comprising:
a radio frequency element (901), adapted to receive a user signal and transmit the user signal to a primary carrier baseband processing element and a secondary carrier baseband processing element;
a primary carrier baseband processing element (903), adapted to perform AD sampling and equalization demodulation on the user signal on a primary carrier received by the radio frequency element (901);
a secondary carrier baseband processing element (904, 905, 906), adapted to perform AD sampling and equalization demodulation on the user signal on a secondary carrier received by the radio frequency element (901);
an uplink demodulated data sharing bus (100, 907), adapted to share and transmit the user signal from the primary carrier baseband processing element (903) and the secondary carrier baseband processing element (904, 905, 906);
a channel decoding element (908), adapted to perform channel decoding on the user signal from the uplink demodulated data sharing bus (100, 907);
a link quality detection element (909), adapted to detect a link quality of the user;
a data distribution element (902), adapted to transmit the user signal on the primary carrier received by the radio frequency element (901) to an extended time slot on the secondary carrier baseband processing element (904, 905, 906)if the link quality detection element (909) detects that an uplink quality of the user is below a preset lower threshold, and cease the transmission of the user signal on the primary carrier received by the radio frequency element (901) to the extended time slot of the secondary carrier baseband processing element (904, 905, 906) if the link quality detection element (909) detects that the uplink quality of the user is above a preset upper threshold;
wherein the extended time slot of the secondary carrier baseband processing element (904, 905, 906) has the same time slot number as a time slot of the primary carrier occupied initially by a user.

8. The system for receiving a radio signal according to claim 7, further comprising:
a secondary carrier time slot detection element (910),
coupled with the link quality detection element (909) and adapted to detect whether the extended time slot of the secondary carrier baseband processing element (904, 905, 906) is idle, if the link quality detection element (909) detects that the link quality of the user is below the preset lower threshold; and
a user adjusting element (911), adapted to, if the secondary carrier time slot detection element (904, 905, 906) detects that the extended time slot of the secondary carrier baseband processing element (904, 905, 906) is not idle, hand over a user, who occupies the extended time slot of the secondary carrier baseband processing element (904, 905, 906), to a second idle time slot within the first cell or to a second cell.

9. The system for receiving a radio signal according to one of claims 7 to 8, wherein the primary carrier baseband processing element (903) and the secondary carrier baseband processing element (904, 905, 906) each comprises:
an AD sampling element, adapted to perform AD sampling on the user signal;
an equalization demodulation element, adapted to perform equalization demodulation on the AD sampled signal output from the AD sampling element;
wherein the primary carrier baseband processing element (903) and the secondary carrier baseband processing element (904, 905, 906) are further adapted to perform AD sampling and equalization demodulation on signals of the same user received by the radio frequency element (901), and transmit the signals to the channel decoding element through the uplink demodulated data sharing bus (907); or
the primary carrier baseband processing element (903) and the secondary carrier baseband processing element (904, 905, 906) are further adapted to perform AD sampling on signals of the same user received by the radio frequency element (901), and
transmit the signals on the uplink data sharing bus (100),
and an equalization demodulation element in the primary carrier baseband processing element (903) is adapted to perform equalization demodulation on the data on the bus (100), and transmit the processed signals to the channel decoding element (908).

## Patentansprüche

1. Verfahren zum Übertragen eines Funksignals, umfassend: Durchführen von Diversitätsübertragung eines Benutzersignals durch Verwendung mindestens eines erweiterten Zeitschlitzes mindestens eines anderen Trägers als einem primären Träger, von denen ein primärer Zeitschlitz anfänglich durch den Benutzer belegt ist, innerhalb einer ersten Zelle, wenn eine Abwärtsgüte des Benutzers unter einem voreingestellten unteren Schwellwert liegt; und
Freigeben (611) des mindestens einen erweiterten Zeitschlitzes, der vom Benutzer belegt ist, wenn die Abwärtsgüte des Benutzers über einem voreingestellten oberen Schwellwert liegt;
wobei der mindestens eine erweiterte Zeitschlitz die gleiche Zeitschlitznummer wie der primäre Zeitschlitz aufweist.

2. Verfahren zum Übertragen eines Funksignals nach Anspruch 1, wobei der Schritt des Durchführens von Diversitätsübertragung eines Benutzersignals weiterhin Folgendes umfasst:
Weiterreichen (608) eines Teils der oder aller Benutzer auf dem mindestens einen erweiterten Zeitschlitz zu einem unbelegten Zeitschlitz innerhalb der ersten Zelle, wenn keiner des mindestens einen erweiterten Zeitschlitzes unbelegt ist und die erste Zelle den unbelegten Zeitschlitz aufweist; oder
Weiterreichen (609) eines Teils der oder aller Benutzer auf dem mindestens einen erweiterten Zeitschlitz zu einem unbelegten Zeitschlitz innerhalb einer zweiten Zelle, wenn keiner des mindestens einen erweiterten Zeitschlitzes unbelegt ist und die erste Zelle keinen unbelegten Zeitschlitz aufweist.

3. Verfahren zum Empfangen eines Funksignals, umfassend:
Durchführen von Diversitätsempfang eines Benutzersignals durch Verwenden mindestens eines erweiterten Zeitschlitzes mindestens eines anderen Trägers als einem primären Träger, von dem ein primärer Zeitschlitz anfänglich durch den Benutzer in einer ersten Zelle belegt ist, wenn eine Aufwärtsgüte des Benutzers unter einem voreingestellten unteren Schwellwert liegt; und
Freigeben (811) des mindestens einen erweiterten Zeitschlitzes, der durch den Benutzer belegt ist, wenn die Aufwärtsgüte des Benutzers über einem voreingestellten oberen Schwellwert liegt;
wobei der mindestens eine erweiterte Zeitschlitz die gleiche Zeitschlitznummer wie der primäre Zeitschlitz aufweist.

4. Verfahren zum Empfangen eines Funksignals nach Anspruch 3, wobei der Schritt des Durchführens von Diversitätsempfang eines Benutzersignals weiterhin Folgendes umfasst:
Weiterreichen (808) eines Teils der oder aller Benutzer auf dem mindestens einen erweiterten Zeitschlitz zu einem unbelegten Zeitschlitz innerhalb der ersten Zelle, wenn keiner des mindestens einen erweiterten Zeitschlitzes unbelegt ist, und die erste Zelle den unbelegten Zeitschlitz aufweist; oder
Weiterreichen (809) eines Teils der oder aller Benutzer auf dem mindestens einen erweiterten Zeitschlitz zu einem unbelegten Zeitschlitz innerhalb einer zweiten Zelle, wenn keiner des mindestens einen erweiterten Zeitschlitzes unbelegt ist, und die erste Zelle keinen unbelegten Zeitschlitz aufweist.

5. System zum Übertragen eines Funksignals, umfassend:
einen Datenteilungsbus (704) eingerichtet zum Teilen eines Benutzersignals;
ein primäres Trägerbasisbandverarbeitungselement (700) eingerichtet zum Übertragen des auf einem Zeitschlitz eines anfänglich durch einen Benutzer belegten Trägers übertragenen Benutzersignals zu einem Hochfrequenzelement (705) und Übertragen des Benutzersignals auf den Datenteilungsbus (704);
ein sekundäres Trägerbasisbandverarbeitungselement (701, 702) eingerichtet zum Übertragen des Benutzersignals auf einem Zeitschlitz eines sekundären Trägers zu dem Hochfrequenzelement (705);
wobei das Hochfrequenzelement (705) zum Modulieren des Benutzersignals eingerichtet ist, das aus dem primären Trägerbasisbandverarbeitungselement (700) und dem sekundären Trägerbasisbandverarbeitungselement (701, 702) stammt, und Übertragen des Benutzersignals über eine Luftschnittstelle;
ein Streckengüteerkennungselement (706) eingerichtet zum Erkennen einer Streckengüte des Benutzers;
ein Datenverteilungselement (703) eingerichtet zum Übertragen gemäß einem Erkennungsergebnis des Streckengüteerkennungselements (706) des Benutzersignals auf dem Datenteilungsbus (704) zu einem erweiterten Zeitschlitz des sekundären Trägerbasisbandverarbeitungselements (701, 702), wenn eine Abwärtsgüte des Benutzers unter einem voreingestellten unteren Schwellwert liegt, und Anhalten der Übertragung des Benutzersignals zu dem erweiterten Zeitschlitz des sekundären Trägerbasisbandverarbeitungselements (701, 702), wenn die Abwärtsgüte des Benutzers über einem voreingestellten oberen Schwellwert liegt, wobei der erweiterte Zeitschlitz des sekundären Trägerbasisbandverarbeitungselements (701, 702) die gleiche Zeitschlitznummer wie der anfänglich durch einen Benutzer belegte Zeitschlitz aufweist.

6. System zum Übertragen eines Funksignals nach Anspruch 5, wobei das System weiterhin Folgendes umfasst:
ein sekundäres Trägerzeitschlitzerkennungselement (707) angekoppelt an das Streckengüteerkennungselement (706) und eingerichtet zum Erkennen, ob der erweiterte Zeitschlitz des sekundären Trägerbasisbandverarbeitungselements (701, 702) unbelegt ist, wenn das Streckengüteerkennungselement (706) erkennt, dass die Streckengüte des Benutzers unter dem voreingestellten unteren Schwellwert liegt; und
ein Benutzereinstellelement (708) eingerichtet zum Weiterreichen, wenn das sekundäre Trägerzeitschlitzerkennungselement (707) erkennt, dass der erweiterte Zeitschlitz des sekundären Trägerbasisbandverarbeitungselements (701, 702) nicht unbelegt ist, eines Benutzers, der den erweiterten Zeitschlitz des sekundären Trägerbasisbandverarbeitungselements (701, 702) belegt, zu einem zweiten unbelegten Zeitschlitz innerhalb der ersten Zelle oder zu einer zweiten Zelle.

7. System zum Empfangen eines Funksignals, umfassend:
ein Hochfrequenzelement (901) eingerichtet zum Empfangen eines Benutzersignals und Übertragen des Benutzersignals zu einem primären Trägerbasisbandverarbeitungselement und einem sekundären Trägerbasisbandverarbeitungselement;
ein primäres Trägerbasisbandverarbeitungselement (903) eingerichtet zum Durchführen von AD-Abtastung und Entzerrungsdemodulation an dem Benutzersignal auf einem durch das Hochfrequenzelement (901) empfangenen primären Träger;
ein sekundäres Trägerbasisbandverarbeitungselement (904, 905, 906) eingerichtet zum Durchführen von AD-Abtastung und Entzerrungsdemodulation an dem Benutzersignal auf einem durch das Hochfrequenzelement (901) empfangenen sekundären Träger;
einen Datenteilungsbus (100, 907) für demodulierte Daten auf der Aufwärtsstrecke eingerichtet zum Teilen und Übertragen des Benutzersignals von dem primären Trägerbasisbandverarbeitungselement (903) und dem sekundären Trägerbasisbandverarbeitungselement (904, 905, 906);
ein Kanaldecodierungselement (908) eingerichtet zum Durchführen von Kanaldecodierung an dem Benutzersignal von dem Datenteilungsbus (100, 907) für demodulierte Daten auf der Aufwärtsstrecke;
ein Streckengüteerkennungselement (909) eingerichtet zum Erkennen einer Streckengüte des Benutzers;
ein Datenverteilungselement (902) eingerichtet zum Übertragen des Benutzersignals auf dem durch das Hochfrequenzelement (901) empfangenen primären Träger zu einem erweiterten Zeitschlitz auf dem sekundären Trägerbasisbandverarbeitungselement (904, 905, 906), wenn das Streckengüteerkennungselement (909) erkennt, dass eine Aufwärtsstreckengüte des Benutzers unter einem voreingestellten unteren Schwellwert liegt, und Anhalten der Übertragung des Benutzersignals auf dem durch das Hochfrequenzelement (901) empfangenen primären Träger zu dem erweiterten Zeitschlitz des sekundären Trägerbasisbandverarbeitungselements (904, 905, 906), wenn das Streckengüteerkennungselement (909) erkennt, dass die Aufwärtsstreckengüte des Benutzers über einem voreingestellten oberen Schwellwert liegt; wobei der erweiterte Zeitschlitz des sekundären Trägerbasisbandverarbeitungselements (904, 905, 906) die gleiche Zeitschlitznummer wie ein Zeitschlitz des anfänglich durch einen Benutzer belegten primären Trägers aufweist.

8. System zum Empfangen eines Funksignals nach Anspruch 7, weiterhin umfassend:
ein sekundäres Trägerzeitschlitzerkennungselement (910) angekoppelt an das Streckengüteerkennungselement (909) und eingerichtet zum Erkennen, ob der erweiterte Zeitschlitz des sekundären Trägerbasisbandverarbeitungselements (904, 905, 906) unbelegt ist, wenn das Streckengüteerkennungselement (909) erkennt, dass die Streckengüte des Benutzers unter dem voreingestellten unteren Schwellwert liegt; und
ein Benutzereinstellelement (911) eingerichtet zum Weiterreichen, wenn das sekundäre Trägerzeitschlitzerkennungselement (904, 905, 906) erkennt, dass der erweiterte Zeitschlitz des sekundären Trägerbasisbandverarbeitungselements (904, 905, 906) nicht unbelegt ist, eines Benutzers, der den erweiterten Zeitschlitz des sekundären Trägerbasisbandverarbeitungselements (904, 905, 906) belegt, zu einem zweiten unbelegten Zeitschlitz innerhalb der ersten Zelle oder zu einer zweiten Zelle.

9. System zum Empfangen eines Funksignals nach einem der Ansprüche 7 bis 8, wobei das primäre Trägerbasisbandverarbeitungselement (903) und das sekundäre Trägerbasisbandverarbeitungselement (904, 905, 906) jeweils Folgendes umfasst:
ein AD-Abtastungselement eingerichtet zum Durchführen von AD-Abtastung an dem Benutzersignal;
ein Entzerrungsdemodulationselement eingerichtet zum Durchführen von Entzerrungsdemodulation an dem aus dem AD-Abtastungselement ausgegebenen ADabgetasteten Signal;
wobei das primäre Trägerbasisbandverarbeitungselement (903) und das sekundäre Trägerbasisbandverarbeitungselement (904, 905, 906) weiterhin eingerichtet sind zum Durchführen von AD-Abtastung und Entzerrungsdemodulation an durch das Hochfrequenzelement (901) empfangenen Signalen des gleichen Benutzers und Übertragen der Signale zu dem Kanaldecodierungselement durch den Datenteilungsbus (907) für demodulierte Daten auf der Aufwärtsstrecke; oder
das primäre Trägerbasisbandverarbeitungselement (903) und das sekundäre Trägerbasisbandverarbeitungselement (904, 905, 906) weiterhin eingerichtet sind zum Durchführen von AD-Abtastung an durch das Hochfrequenzelement (901) empfangenen Signalen des gleichen Benutzers, und Übertragen der Signale auf dem Aufwärtsstrecken-Datenteilungsbus (100), und ein Entzerrungsdemodulationselement in dem primären Trägerbasisbandverarbeitungselement (903) eingerichtet ist zum Durchführen von Entzerrungsdemodulation an den Daten auf dem Bus (100) und Übertragen der verarbeiteten Signale zu dem Kanaldecodierungselement (908).

## Revendications

1. Procédé pour transmettre un signal radio, le procédé comprenant les étapes consistant à :
effectuer une transmission en diversité d'un signal d'utilisateur au moyen d'au moins un créneau temporel étendu d'au moins une porteuse autre qu'une porteuse primaire dont un créneau temporel primaire est initialement occupé par l'utilisateur, dans une première cellule, si une qualité de liaison descendante de l'utilisateur est inférieure à un seuil inférieur prédéfini ; et
libérer (611) ledit au moins un créneau temporel étendu qui est occupé par l'utilisateur si la qualité de liaison descendante de l'utilisateur est supérieure à un seuil supérieur prédéfini ;
lequel au moins un créneau temporel étendu possède le même numéro de créneau temporel que le créneau temporel primaire.

2. Procédé pour transmettre un signal radio selon la revendication 1, dans lequel l'étape consistant à effectuer une transmission en diversité d'un signal d'utilisateur comprend en outre l'étape consistant à :
transférer (608) une partie ou la totalité d'utilisateurs sur ledit au moins un créneau temporel étendu vers un créneau temporel libre dans la première cellule si aucun dudit au moins un créneau temporel étendu n'est libre et la première cellule dispose du créneau temporel libre ; ou
transférer (609) une partie ou la totalité d'utilisateurs sur ledit au moins un créneau temporel étendu vers un créneau temporel libre dans une deuxième cellule si aucun dudit au moins un créneau temporel étendu n'est libre et la première cellule ne dispose pas de créneau temporel libre.

3. Procédé pour recevoir un signal radio, le procédé comprenant les étapes consistant à :
effectuer une réception en diversité d'un signal d'utilisateur au moyen d'au moins un créneau temporel étendu d'au moins une porteuse autre qu'une porteuse primaire dont un créneau temporel primaire est initialement occupé par l'utilisateur, dans une première cellule, si une qualité de liaison montante de l'utilisateur est inférieure à un seuil inférieur prédéfini ; et
libérer (811) ledit au moins un créneau temporel étendu qui est occupé par l'utilisateur si la qualité de liaison montante de l'utilisateur est supérieure à un seuil supérieur prédéfini ;
lequel au moins un créneau temporel étendu possède le même numéro de créneau temporel que le créneau temporel primaire.

4. Procédé pour recevoir un signal radio selon la revendication 3, dans lequel l'étape consistant à effectuer une réception en diversité d'un signal d'utilisateur comprend en outre l'étape consistant à :
transférer (808) une partie ou la totalité d'utilisateurs sur ledit au moins un créneau temporel étendu vers un créneau temporel libre dans la première cellule si aucun dudit au moins un créneau temporel étendu n'est libre et la première cellule dispose du créneau temporel libre ; ou
transférer (809) une partie ou la totalité d'utilisateurs sur ledit au moins un créneau temporel étendu vers un créneau temporel libre dans une deuxième cellule si aucun dudit au moins un créneau temporel étendu n'est libre et la première cellule ne dispose pas de créneau temporel libre.

5. Système pour transmettre un signal radio, comprenant :
un bus de partage de données (704), adapté à partager un signal d'utilisateur ;
un élément de traitement en bande de base de porteuse primaire (700), adapté à transmettre le signal d'utilisateur, transmis sur un créneau temporel d'une porteuse initialement occupé par un utilisateur, à un élément radiofréquence (705), et à transmettre le signal d'utilisateur sur le bus de partage de données (704) ;
un élément de traitement en bande de base de porteuse secondaire (701, 702), adapté à transmettre le signal d'utilisateur sur un créneau temporel d'une porteuse secondaire à l'élément radiofréquence (705) ;
l'élément radiofréquence (705), adapté à moduler le signal d'utilisateur provenant de l'élément de traitement en bande de base de porteuse primaire (700) et de l'élément de traitement en bande de base de porteuse secondaire (701, 702), et à transmettre le signal d'utilisateur par une interface hertzienne ;
un élément de détection de qualité de liaison (706), adapté à détecter une qualité de liaison de l'utilisateur ;
un élément de distribution de données (703), adapté, en fonction d'un résultat de détection de l'élément de détection de qualité de liaison (706), à transmettre le signal d'utilisateur sur le bus de partage de données (704) à un créneau temporel étendu de l'élément de traitement en bande de base de porteuse secondaire (701, 702) si une qualité de liaison descendante de l'utilisateur est inférieure à un seuil inférieur prédéfini, et à interrompre la transmission du signal d'utilisateur au créneau temporel étendu de l'élément de traitement en bande de base de porteuse secondaire (701, 702) si la qualité de liaison descendante de l'utilisateur est supérieure à un seuil supérieur prédéfini, lequel créneau temporel étendu de l'élément de traitement en bande de base de porteuse secondaire (701, 702) possède le même numéro de créneau temporel que le créneau temporel initialement occupé par un utilisateur.

6. Système pour transmettre un signal radio selon la revendication 5, le système comprenant en outre :
un élément de détection de créneau temporel de porteuse secondaire (707), couplé à l'élément de détection de qualité de liaison (706) et adapté à détecter si le créneau temporel étendu de l'élément de traitement en bande de base de porteuse secondaire (701, 702) est libre, si l'élément de détection de qualité de liaison (706) détecte que la qualité de liaison de l'utilisateur est inférieure au seuil inférieur prédéfini ; et
un élément d'ajustement d'utilisateur (708), adapté, si l'élément de détection de créneau temporel de porteuse secondaire (707) détecte que le créneau temporel étendu de l'élément de traitement en bande de base de porteuse secondaire (701, 702) n'est pas libre,
à transférer un utilisateur qui occupe le créneau temporel étendu de l'élément de traitement en bande de base de porteuse secondaire (701, 702) vers un deuxième créneau temporel libre dans la première cellule ou vers une deuxième cellule.

7. Système pour recevoir un signal radio, comprenant :
un élément radiofréquence (901), adapté à recevoir un signal d'utilisateur et à transmettre le signal d'utilisateur à un élément de traitement en bande de base de porteuse primaire et un élément de traitement en bande de base de porteuse secondaire ;
un élément de traitement en bande de base de porteuse primaire (903), adapté à effectuer un échantillonnage analogique-numérique et une égalisation-démodulation sur le signal d'utilisateur sur une porteuse primaire reçu par l'élément radiofréquence (901) ;
un élément de traitement en bande de base de porteuse secondaire (904, 905, 906), adapté à effectuer un échantillonnage analogique-numérique et une égalisation-démodulation sur le signal d'utilisateur sur une porteuse secondaire reçu par l'élément radiofréquence (901) ;
un bus de partage de données démodulées de liaison montante (100, 907), adapté à partager et à transmettre le signal d'utilisateur provenant de l'élément de traitement en bande de base de porteuse primaire (903) et de l'élément de traitement en bande de base de porteuse secondaire (904, 905, 906) ;
un élément de décodage de canal (908), adapté à effectuer un décodage de canal sur le signal d'utilisateur provenant du bus de partage de données démodulées de liaison montante (100, 907) ;
un élément de détection de qualité de liaison (909), adapté à détecter une qualité de liaison de l'utilisateur ;
un élément de distribution de données (902), adapté à transmettre le signal d'utilisateur sur la porteuse primaire reçu par l'élément radiofréquence (901) à un créneau temporel étendu sur l'élément de traitement en bande de base de porteuse secondaire (904, 905, 906) si l'élément de détection de qualité de liaison (909) détecte qu'une qualité de liaison montante de l'utilisateur est inférieure à un seuil inférieur prédéfini, et à interrompre la transmission du signal d'utilisateur sur la porteuse primaire reçu par l'élément radiofréquence (901) au créneau temporel étendu de l'élément de traitement en bande de base de porteuse secondaire (904, 905, 906) si l'élément de détection de qualité de liaison (909) détecte que la qualité de liaison montante de l'utilisateur est supérieure à un seuil supérieur prédéfini ;
lequel créneau temporel étendu de l'élément de traitement en bande de base de porteuse secondaire (904, 905, 906) possède le même numéro de créneau temporel de la porteuse primaire que le créneau temporel initialement occupé par un utilisateur.

8. Système pour recevoir un signal radio selon la revendication 7, comprenant en outre :
un élément de détection de créneau temporel de porteuse secondaire (910), couplé à l'élément de détection de qualité de liaison (909) et adapté à détecter si le créneau temporel étendu de l'élément de traitement en bande de base de porteuse secondaire (904, 905, 906) est libre, si l'élément de détection de qualité de liaison (909) détecte que la qualité de liaison de l'utilisateur est inférieure au seuil inférieur prédéfini ; et
un élément d'ajustement d'utilisateur (911), adapté, si l'élément de détection de créneau temporel de porteuse secondaire (904, 905, 906) détecte que le créneau temporel étendu de l'élément de traitement en bande de base de porteuse secondaire (904, 905, 906) n'est pas libre, à transférer un utilisateur qui occupe le créneau temporel étendu de l'élément de traitement en bande de base de porteuse secondaire (904, 905, 906) vers un deuxième créneau temporel libre dans la première cellule ou vers une deuxième cellule.

9. Système pour recevoir un signal radio selon l'une des revendications 7 et 8, dans lequel l'élément de traitement en bande de base de porteuse primaire (903) et l'élément de traitement en bande de base de porteuse secondaire (904, 905, 906) comprennent chacun :
un élément d'échantillonnage analogique-numérique, adapté à effectuer un échantillonnage analogique-numérique sur le signal d'utilisateur ;
un élément d'égalisation-modulation, adapté à effectuer une égalisation-modulation sur le signal ayant subi un échantillonnage analogique-numérique fourni par l'élément d'échantillonnage analogique-numérique ;
l'élément de traitement en bande de base de porteuse primaire (903) et l'élément de traitement en bande de base de porteuse secondaire (904, 905, 906) étant en outre adaptés à effectuer un échantillonnage analogique-numérique et une égalisation-démodulation sur des signaux du même utilisateur reçus par l'élément radiofréquence (901), et à transmettre les signaux à l'élément de décodage de canal par le bus de partage de données démodulées de liaison montante (907) ; ou
l'élément de traitement en bande de base de porteuse primaire (903) et l'élément de traitement en bande de base de porteuse secondaire (904, 905, 906) étant en outre adaptés à effectuer un échantillonnage analogique-numérique sur des signaux du même utilisateur reçus par l'élément radiofréquence (901), et à transmettre les signaux sur le bus de partage de données de liaison montante (100), et un élément d'égalisation-démodulation dans l'élément de traitement en bande de base de porteuse primaire (903) étant adapté à effectuer une égalisation-démodulàtion sur les données sur le bus (100), et à transmettre les signaux traités à l'élément de décodage de canal (908).
